# EUROPÄISCHE PATENTSCHRIFT

(11) **EP 1 813 129 B1**
(45) Veröffentlichungstag und Bekanntmachung des Hinweises auf die Patenterteilung: **21.05.2008**
(21) Anmeldenummer: 05796204.5
(22) Anmeldetag: 27.09.2005
(51) Int. Cl.: H04Q 7/38

(54) **VERFAHREN UND SYSTEM ZUR ÜBERMITTLUNG VON INFORMATIONEN ÜBER DEN STANDORT EINES MOBILFUNKENDGERÄTS MITTELS EINES MOBILFUNKNETZES AN EINEN EMPFÄNGER**
METHOD AND SYSTEM FOR TRANSMITTING DATA ON THE LOCATION OF A MOBILE RADIO TERMINAL TO A RECEIVER BY MEANS OF A MOBILE RADIO NETWORK
PROCEDE ET SYSTEME POUR TRANSMETTRE A UN RECEPTEUR DES INFORMATIONS SUR L'EMPLACEMENT D'UN TERMINAL DE RADIOTELEPHONIE MOBILE AU MOYEN D'UN RESEAU DE RADIOTELEPHONIE MOBILE

(30) Priorität: 08.10.2004 DE 102004049442
(43) Veröffentlichungstag der Anmeldung: 01.08.2007
(73) Patentinhaber: Deutsche Telekom AG, 53113 Bonn (DE)
(72) Erfinder: KRAMARZ-VON KOHOUT, Gerhard, 53111 Bonn (DE)
(74) Vertreter: Riebling, Peter
(86) Internationale Anmeldenummer: PCT/DE2005/001706
(87) Internationale Veröffentlichungsnummer: WO 2006/039889

(56) Entgegenhaltungen:
- DE-A1- 19 853 042
- US-A1- 2002 098 829
- US-A1- 2003 050 039
- US-B1- 6 477 363
- US-B1- 6 697 630

## Beschreibung

Die Erfindung betrifft ein Verfahren und System zur Übermittlung von Informationen über den Standort eines Mobilfunkendgeräts mittels eines Mobilfunknetzes an einen Empfänger, insbesondere Verfahren und Systeme zur Signalisierung zumindest zellgenauer Ortsinformationen eines Mobilfunkendgeräts aus einem Mobilfunknetz. Die Erfindung ermöglicht insbesondere im Falle eines Notrufes auf einfache Weise die Übermittlung von Ortsinformationen aus einem Mobilfunknetz an eine Notrufleitstelle.

### Stand der Technik

Ausgehend von der Situation in der Bundesrepublik Deutschland gibt es zwei unterschiedliche Notrufträger, nämlich die Polizei einerseits und die Feuerwehr andererseits. Die Polizei ist bundesweit über die 110, die Feuerwehr ist bundesweit über 112 erreichbar. Dies gilt auch für den Mobilfunk, ein Mobilfunkkunde kann einen Notruf über 110 bzw. 112 kostenfrei absetzen. Und selbst über ein mobiles Endgerät ohne Teilnehmermodul SIM (Chipkarte, auf der im Mobilfunk das Kundenverhältnis beruht) lassen sich Notrufe kostenfrei absetzen.

Polizei und Feuerwehr betreiben über das gesamte Bundesgebiet verteilt lokale Leitstellen, über die eingehende Notrufe bearbeitet werden. Auf diese Weise soll erreicht werden, dass der Weg für die Einsatzkräfte zum Einsatzort nicht allzu weit ist.

Das Absetzen von Notrufen aus einem Mobilfunknetz in Deutschland wird derzeit technisch wie folgt realisiert. Sämtliche lokale Leitstellen sind direkt an das Festnetz der Deutschen Telekom AG angebunden. In den Vermittlungsstellen des Mobilfunknetzes werden Tabellen geführt, in denen zu jeder Funkzelle, die jeweils zum Versorgungsbereich einer Vermittlungsstelle gehören, die Festnetzrufnummern der für den geographischen Bereich der Funkzelle zuständigen Leitstellen der Polizei bzw. der Feuerwehr hinterlegt sind.
Empfängt nun eine Vermittlungsstelle des Mobilfunknetzes den Notruf eines mobilen Endgerätes, so kann es aus der zum Notruf gehörigen Signalisierung die Funkzelle auswerten, aus der heraus der Notruf aufgebaut wurde. An Hand der in der Vermittlungsstelle hinterlegten Tabelle wird der Notruf dann anhand der dort hinterlegten Rufnummer ins Festnetz zu der zugehörigen Leitstelle weitergeleitet. Auf diese Weise erhält in der Regel die lokal zuständige Leitstelle zeitnah den Notruf. Eine direkte Information zum Standort desjenigen, der aus einem Mobilfunknetz einen Notruf absetzt, wird nicht signalisiert.

Die beschriebene bisher so praktizierte Vermittlung von Notrufen ist aus verschiedenen Gründen problematisch.
Zum einen ist es nicht garantiert, dass tatsächlich die lokal zuständige Leitstelle den Notruf erhält. Die Funkversorgung mittels Funkzellen endet nicht exakt an politischen Grenzen. So kann es sein, dass der Notrufer sich in dem einen Bundesland aufhält, seine Funkversorgung aber im Moment des Notrufes durch die Funkzelle eines anderen Bundeslandes erbracht wird (bezogen auf die Lage der Leitstelle, die über die Festnetzrufnummer erreicht wird, welche in der Vermittlungsstelle zu dieser Funkzelle hinterlegt ist). Die Notrufträger sind föderal organisiert, d.h. wenn der Notruf in ein anderes Bundesland hinausgeht, so erreicht er nicht die für den Schadensort zuständige Leitstelle.
Zum anderen erhält die Notrufstelle über die Signalisierung keinerlei Information über den Ort, von dem der Notruf abgesetzt wurde. Auch wenn der Leitstelle die Mobilfunkrufnummer des Anrufers angezeigt werden sollte (was bei Notrufen ohne SIM nicht der Fall ist), wäre ihr damit, weil es sich um einen mobilen Anschluss handelt, kein Rückschluss auf den Anruferaufenthalt möglich. So muss die Leitstelle derzeit hoffen, dass der Notrufer noch in der Lage ist, den Ort zu beschreiben, von dem aus er anruft, was aber zumindest Zeit kostet.

Standortbezogene Dienste im Mobilfunk, sogenannte Location Based Services, wie zum Beispiel WAP-Dienste, die dem Anrufer seine Frage nach der nächsten Tankstelle beantworten, beruhen auf der Kenntnis des Aufenthaltsortes des Anrufers. Heutige Dienste dieser Art setzen technisch ausschließlich auf der Kenntnis der Funkzelle, in der ein Anruf aufgebaut wurde, auf. Bekannt sind auch Techniken, die - etwa auf Basis von satellitengestützten Ortungstechnologien wie GPS, Galileo - eine genauere Lokalisierung erlauben würden. Deren Implementierung bedeutet aber einen sehr hohen Investitionsaufwand für einen Netzbetreiber, so dass heute in Deutschland nach wie vor ausschließlich zellbasierte Techniken eingesetzt werden.

Aber auch auf Basis der zellbasierten Techniken ist es im Falle eines Notrufes nicht ohne weiteres möglich, die Information über die Funkzelle, in der der Notruf abgesetzt wird, zeitnah mit dem Anruf an die Leitstelle weiterzugeben. Bekannt sind sogenannte "Push-Techniken", hierzu muss zusätzlich und parallel zur Sprachverbindung eine Datenverbindung zu ggf. ein und derselben Zielrufnummer aufgebaut werden. Im Datenkanal würde dann die Zellinformation übertragen werden. In der Praxis bestehen heute hierbei nach Auskunft der Hersteller noch erhebliche Probleme, weil die Netze und Endgeräte diesen Modus nicht hinreichend unterstützen. Bekannt sind weiterhin als Alternative hierzu die sogenannten "Pull-Techniken". Hierzu fordert der Empfänger (= Leitstelle) vom Absender (= Notrufer bzw. Mobilfunknetz) die Ortsinformation an. Das Mobilfunknetz stellt die Ortsinformation dann mittels eines Datensatzes, der z.B. über einen Datenkanal an die Leitstelle übermittelt wird, bereit. Dies ist aus Sicht der Vermittlungstechnik mit geringeren Auswirkungen und Problemen (im Vergleich zu "Push-Diensten") verbunden, aber die heutige Technik der Leitstellen unterstützt "Pull-Dienste" nicht. Zudem ist die zeitliche Performance eines Pull-Verfahrens prinzipiell der Performance eines Push-Verfahrens unterlegen, weil die Ortsinformation beim Empfänger erst im Verlaufe des Notrufes (oder gar nachträglich) und nicht schon zu Beginn des Notrufes zur Verfügung steht. Die Hersteller geben für die Implementierung zellbasierter Pull- oder Push-Verfahren einen nicht unbedeutenden Investitionsbedarf für die Mobilfunknetzbetreiber an.

Das europäische Parlament hat sich des Themas der Bereitstellung von Ortsinformationen bei einem Notruf bereits seit einiger Zeit angenommen. So fordert die europäische Universaldienstrichtlinie ("Richtlinie 2002/22/EG des europäischen Parlaments und des Rates vom 07. März 2002 über den Universaldienst und Nutzerrechte bei elektronischen Kommunikationsnetzen und -diensten") in Artikel 26, Absatz 3: *Die Mitgliedstaaten stellen sicher, dass die Unternehmen, die öffentliche Telefonnetze betreiben, den Notrufstellen bei allen unter der einheitlichen europäischen Notrufnummer 112 durchgeführten Anrufen Informationen zum Anruferstandort übermitteln, soweit dies technisch möglich ist*.
Die Bundesrepublik Deutschland hat diese Forderung aufgegriffen und im § 108 Abs. 1 des neuen Telekommunikationsgesetzes TKG v. 25.06.2004 umgesetzt: *Wer Telekommunikationsnetze betreibt, die für öffentlich zugängliche Telefondienste genutzt werden, ist verpflichtet, Notrufe einschließlich* ... *der Daten, die zur Ermittlung des Standortes erforderlich sind, von dem die Notrufverbindung ausgeht, an die örtlich zuständige Notrufabfragestelle unverzüglich zu übermitteln*.
So stehen nunmehr in Deutschland auch die Mobilfunknetzbetreiber vor der technischen Herausforderung, dieser Verpflichtung aus dem Notrufparagrafen des TKG, Notrufe einschließlich Standortdaten zu übermitteln, gerecht zu werden.

Die DE 198 53 042 A1 offenbart ein Mobiltelefon, speziell für Notrufe. Die Übertragung von Ortsinformationen an eine Notrufzentrale wird erwähnt, aber nicht genauer spezifiziert. Die eigentliche Ortsinformation wird als Daten oder in Sprache umgesetzt und vor der Gesprächsverbindung an die Notrufzentrale übertragen.

Die US 6 477 363 B1 und auch US 2002 / 0098829 A1 offenbaren Verfahren zur Übertragung von Ortsinformationen, beispielsweise im Zusammenhang mit Notrufen oder über Mobiltelefone abgeschlossen Wetten. Die Ortsinformationen werden per GPS im Mobiltelefon erfasst, in Tonsignale umgesetzt und die Tonsignale an eine Notrufzentrale bzw. ein Wettbüro übertragen.

### Beschreibung der Erfindung

Die Aufgabe der vorliegenden Erfindungsidee ist es daher, ein Verfahren und System anzugeben, mit denen bei Mobilfunknetzen mit geringem Aufwand das beschriebene Problem der fehlenden Signalisierung einer zumindest zellgenauen Ortsinformation an einen Empfänger gelöst wird.

Diese Aufgabe wird erfindungsgemäß durch die Merkmale der unabhängigen Patentansprüche gelöst. Es wird auf die Offenbarung der unabhängigen Ansprüche verwiesen.

Bevorzugte Ausgestaltungen und vorteilhafte Weiterbildungen der Erfindung ergeben sich aus den Merkmalen der abhängigen Ansprüche. Es wird auf die Offenbarung der abhängigen Ansprüche verwiesen.

Vorteil der vorliegenden Erfindungsidee ist ihre Realisierbarkeit mit geringem Aufwand in der Vermittlungstechnik des Mobilfunknetzes. Auf diese Weise reduziert sich auch das Problem der Fehlleitung z.B. von Notrufen, da der Empfänger eine direkte Standortinformation des Notrufenden erhält und somit ggf. den Notruf gezielt weiterleiten kann.

Die Realisierung der Erfindung basiert auf dem Push-Prinzip. Die im neuen deutschen Telekommunikationsgesetz TKG geforderte "Unverzüglichkeit" der Übermittlung der Standortdaten ist damit gewährleistet.

Die Realisierung wird im Folgenden in zwei Varianten beschrieben.

Die Realisierung erlaubt bevorzugt die Übermittlung in einem Push-Verfahren von zellgenauen Standortdaten, das heißt hier der Identität der Funkzelle, in der sich das Mobilfunkendgerät befindet. Der mit der Realisierung verbundene Aufwand in der Vermittlungstechnik des Mobilfunknetzes ist hierbei als besonders gering anzusehen.

Insbesondere für ein Mobilfunknetz, in dem es möglich ist, zur Ermittlung des Standortes, von dem ein Notruf ausgeht, auf der Basis genauer (als zellgenau) arbeitender Lokalisierungstechniken - etwa auf Basis von Satellitenortungstechnologie (GPS, Galileo) - präzisere Ortsinformationen bereitzustellen, wird darüber hinaus eine Ergänzung der Realisierung beschrieben, die auch Standortdaten beliebiger Genauigkeit in einem Push-Verfahren an die Notrufabfragestelle übermittelt. Sie eignet sich auch dann, wenn über das Mobilfunkendgerät spezifische Standortdaten an das Mobilfunknetz übermittelt werden (denkbar etwa bei Mobilfunkendgeräten mit eingebautem oder extern angeschlossenem GPS-Empfänger). Die ergänzende Variante eignet sich grundsätzlich für beliebige Standortdaten, wie genau auch immer sie sind und wie auch immer sie kodiert sind. Bei ihrer Realisierung ist allerdings der zusätzliche Aufwand in der Vermittlungstechnik etwas höher.

### Beschreibung von bevorzugten Ausgestaltungen der Erfindung

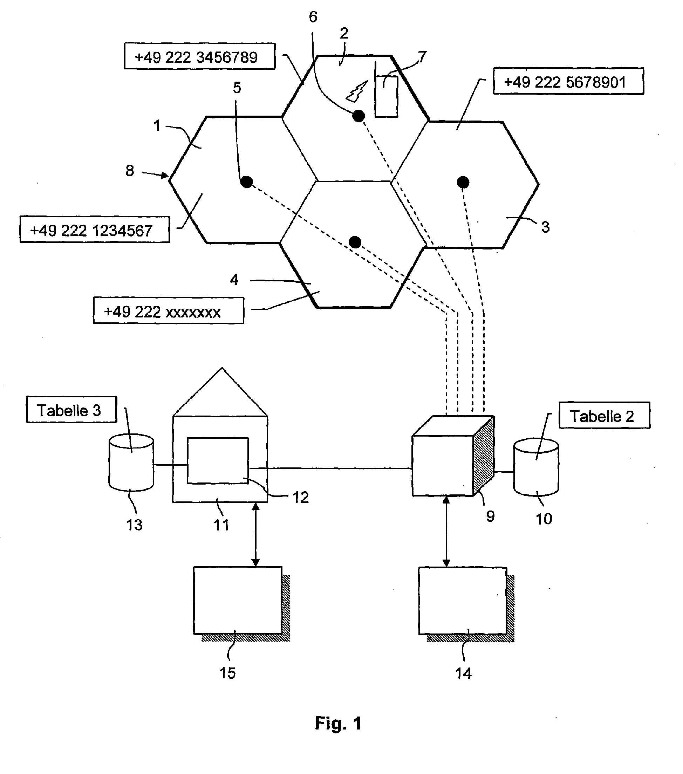

Figur 1 zeigt eine vereinfachte Darstellung der zur Durchführung der Erfindung erforderlichen technischen Komponenten.

Die Beschreibung einer Implementierung der Erfindungsidee ist nachfolgend mit Bezug auf Figur 1 aufgeführt. In den Beispielen wird das Szenario eines von einem Mobilfunkendgerät 7 abgesetzten Notrufs an einen Notrufträger 11 (Empfänger), wie z.B. Polizei oder Feuerwehr, beschrieben. Das Mobilfunknetz ist schematisch durch die Funkzellen 1, 2, 3 und 4, die Basisstationen 5, 6 und eine Mobilvermittlungsstelle 9 dargestellt. Selbstverständlich ist jeder Funkzelle 1, 2, 3, 4 mindestens eine Basisstation zugeordnet. Erfindungsgemäß wird mit dem Notruf automatisch eine Information über den Standort des Mobilfunkendgeräts 7 an den Notrufträger 11 übermittelt, anhand welcher eine schnelle, zielgerichtete Hilfe erfolgen kann.
Die Beschreibung geht hierbei sowohl auf die Seite des Mobilfunknetzes bzw. dessen Vermittlungstechnik als auch auf die Seite der Notrufträger (Polizei, Feuerwehr) bzw. deren Technik ein.

### Bevorzugte Ausgestaltung der Erfindung:

### Voraussetzung:

Das Mobilfunknetz hat in der Vermittlungstechnik Kenntnis über die Identität der Funkzelle, von der die Notrufverbindung ausgeht. Wie kann diese Information an die Leitstelle signalisiert werden?

### Implementierung

Wie beschrieben werden in den Vermittlungsstellen 9 (MSC) des Mobilfunknetzes bzw. damit verbunden Datenbasen 10 Tabellen geführt, in denen zu jeder Funkzelle 1, 2, 3 und 4, die jeweils zum Versorgungsbereich einer Vermittlungsstelle 9 gehören, die Festnetzrufnummern der für den geographischen Bereich der Funkzelle zuständigen Leitstellen 11 der Polizei bzw. der Feuerwehr hinterlegt sind.
Eine solche Tabelle (innerhalb einer Vermittlungsstelle) hat vereinfacht den folgenden, in Tabelle 1 dargestellten Aufbau:

**Tabelle 1**

| Nummer der Funkzelle | Festnetzrufnummer Polizei "110" | Festnetzrufnummer Feuerwehr "112" |
|---|---|---|
| Zelle 1 | +49 228 1234567 | +49 228 7654321 |
| Zelle 2 | +49 228 3456789 | +49 228 8765432 |
| Zelle 3 | +49 228 1234567 | +49 228 7654321 |
| ... | ... | ... |

Nach diesem Beispiel wird ein Notruf 110, der über die Funkzelle 1 zu dieser Vermittlungsstelle aufgebaut wird, anhand der gewählten Rufnummer "110" zur Festnetzrufnummer +49 228 1234567 weitergeleitet. Ein Notruf 112, der über die Funkzelle 1 zu dieser Vermittlungsstelle aufgebaut wird, wird anhand der Notrufsignalisierung "emergency call" als Notruf erkannt und zur Festnetzrufnummer +49 228 7654321 weitergeleitet.
Aber - um im Beispiel zu bleiben - auch die Notrufe aus Zelle 3 werden zu genau diesen Festnetzrufnummern weitergeleitet, etwa weil die Versorgungsgebiete der beiden Funkzellen 1 und 3 hinreichend nahe beieinander sind und daher jeweils dieselben Leitstellen für den Notruf zuständig ist. Das Versorgungsgebiet der Funkzelle 2 mag hiervon so weit entfernt sein, dass hierfür andere Leitstellen zuständig sein mögen.
Der Einfachheit halber sind die Zellen hier durchnumeriert, tatsächlich werden Funkzellen im Mobilfunk durch gewisse Funkzellen-Kennungen (Cl = Cell Identifier) in eindeutiger Weise (innerhalb eines Mobilfunknetzes) identifiziert.

### Genau hier setzt die Erfindungsidee ein:

Wenn die Zuordnung zwischen "Nummer der Funkzelle" und den Festnetzrufnummern der Leitstellen 11 von Polizei bzw. Feuerwehr injektiv wäre, wenn also - anders als im obigen Beispiel - zwei unterschiedlichen Funkzellen aus 1, 2, 3, 4 auch zwei unterschiedliche Festnetzrufnummern zugeordnet wären, so könnte in der Leitstelle 11 mit Kenntnis der "gewählten" Rufnummer, also der Rufnummer, auf die die Vermittlungsstelle 9 den Notruf weitergeleitet hat, rückwärts auf die zugehörige Funkzelle geschlossen werden, vorausgesetzt, die Leitstelle hätte kompletten Überblick über die Zuordnungstabelle. Beispielsweise sei etwa folgende Zuordnungstabelle (Tabelle 2) gegeben:

**Tabelle 2**

| Nummer der Funkzelle | Festnetzrufnummer Polizei | Festnetzrufnummer Feuerwehr |
|---|---|---|
| Zelle 1 | +49 222 1234567 | +49 222 7654321 |
| Zelle 2 | +49 222 3456789 | +49 222 8765432 |
| Zelle 3 | +49 222 5678901 | +49 222 9876543 |
| ... | ... | ... |

Eine Auswertung auf Seiten beispielsweise der Leitstelle 11 der Polizei hätte dann folgendes in Tabelle 3 vereinfacht dargestelltes Ergebnis :

**Tabelle 3**

| Gewählte Rufnummer | Nummer der Funkzelle |
|---|---|
| +49 222 1234567 | Zelle 1 |
| +49 222 3456789 | Zelle 2 |
| +49 222 5678901 | Zelle 3 |
| ... | ... |

Wenn die Leitstelle 11 der Polizei darüber hinaus vom Mobilfunknetzbetreiber (offline) Informationen über den Standort der Funkzellen 1, 2, 3, 4 bzw. der diese Funkzellen versorgenden Basisstationen 5, 6, z.B. in geographischen Koordinaten eines gewissen Koordinatensystems wie UTM-Ref, und sonstige Charakteristika, z.B. Leistungsstärke, Sektorisierung, bekommen hat, so kann sie nun von der Nummer der Funkzelle auf den Standort der Sendertechnik der Zelle und hierüber auf den Standort des Mobilfunkendgerätes 7 bzw. desjenigen, der den Notruf abgesetzt hat, schließen.
Auch diese Zuordnung zwischen "gewählter" Rufnummer des bei der Leitstelle ankommenden Notrufs und der zugehörigen geographischen Standortinformation (Funkzelle) kann automatisiert werden, wenn die Leitstelle die offline vom Mobilfunknetzbetreiber erhaltenen Informationen elektronisch zur Weiterverarbeitung erfasst.

Es werden also im Einzelnen folgende Verfahrenschritte und folgende technische Einrichtungen bei den Beteiligten vorgeschlagen:
1) Die Verwaltungen 15 der Notrufträger (Polizei, Feuerwehr) informieren die Mobilfunknetzbetreiber über die von ihnen betriebenen Leitstellen 11 und deren örtliche Zuständigkeiten (Einzugsbereich 8).
2) Ein Mobilfunknetzbetreiber 14 informiert den Notrufträger über die Anzahl der von ihm im Einzugsbereich der jeweiligen Leitstellen betriebenen Funkzellen 1, 2, 3 und 4.
3) Die technische Einrichtung 12 der Leitstelle 11 umfasst vorzugsweise eine oder auch mehrere Telekommunikationsanlagen (TK-Anlagen), bevorzugt eine Nebenstellenanlage, die für jedes im Einzugsbereich betriebenes Mobilfunknetz und pro Funkzelle, für die die Leitstelle 11 örtlich zuständig ist, eine eigene, von außen anwählbare Rufnummer (vgl. Tabelle 2) unterstützt. Diese Rufnummernzuordnung ist z.B. in einer Datenbasis 13 gespeichert. Wenn also im Land vier Mobilfunknetzbetreiber aktiv sind und wenn der erste hiervon 80 Funkzellen im Einzugsbereich der Leitstelle betreibt, der zweite 70, der dritte 100 und der vierte 110, so müssen der TK-Anlage zumindest 360 Rufnummern zugewiesen werden können, um alle Funkzellen aller Mobilfunknetzbetreiber im Einzugsbereich 8 eindeutig unterscheiden zu können.
4) Die Leitstelle 11 teilt den Mobilfunknetzbetreibern die von ihnen zu nutzenden Rufnummern (Tabelle 2) mit.
5) Jeder Mobilfunknetzbetreiber 14 ordnet die zur Verfügung stehenden Rufnummern - zwingend injektiv - den von ihm im Einzugsbereich 8 betriebenen Funkzellen 1, 2, 3 und 4 zu und speichert die Zuordnung in der Datenbasis 10. Mobilfunknetze der dritten Generation, z.B. UMTS, nutzen insbesondere in städtischen Gebieten sehr kleine Funkzellen, sogenannte Pikozellen, mit einem Durchmesser von weniger als 100m. Erfindungsgemäß kann eine Rufnummer mehreren benachbarten Zellen zugeordnet werden, die zu einem größeren Verbund zusammengefasst werden.
6) Der Mobilfunknetzbetreiber 14 informiert den Notrufträger 11, 15 über die von ihm im Einzugsbereich 8 betriebenen Funkzellen 1, 2, 3, 4 und übergibt hierzu pro Funkzelle insbesondere Standortdaten, d.h.
   a. Koordinaten (in einem bilateral abgestimmten Koordinatensystem) des Standortes der Sendertechnik 5, 6 (z.B. "32UPA340756" als UTM-Ref-Koordinaten)
   b. Die der Funkzelle zugeordnete Rufnummer
   und darüber hinaus optional beispielsweise folgende Detailinformationen:
   c. Kennung der Zelle (Cl)
   d. Bezeichnung der Zelle (z.B. Bonn-Beuel III)
   e. postalische Orts- und Straßenangabe (z.B. Landgrabenweg 151, 53227 Bonn)
   f. Sendercharakteristika (z.B. Leistung, Sektorisierung)
   Im Falle eines Verbundes (siehe vorherigen Schritt 5) muss sinngemäß vorgegangen werden (etwa Koordinaten eines geeigneten Ortes des Verbundgebietes).
7) Die TK-Anlage 12 der Leitstelle 11 muss über das Leistungsmerkmal "Called Number Identification" verfügen, damit die gewählte (hier: die bei einem Notruf von der Vermittlungsstelle 9 weitergeleitete) Rufnummer erkannt werden kann.
8) Die TK-Anlage der Leitstelle 9 hat eine technische Einrichtung, die der gewählten Rufnummer die gemäß Schritt 6) zugehörigen Koordinaten zuordnen und diese Koordinaten dann an einer Ausgabeeinheit (Display) für das Bedienpersonal in der Leitstelle bereitstellen kann.
9) Optional kann diese technische Einrichtung gemäß Schritt 8. auch in der Lage sein, alle optionalen Informationen (oder einzelne hiervon) gemäß Schritt 6. an einer Ausgabeeinheit (Display) für das Bedienpersonal bereitzustellen.
10)Optional kann diese technische Einrichtung gemäß Schritt 8. auch in der Lage sein, die Koordinaten des Standortes des Senders (Basisstationen 5, 6 gemäß Schritt 6. und ggf. darüber hinaus die Sendecharakteristika gemäß Schritt 8. graphisch aufzubereiten und auf diese Weise den Standort des Senders auf einer Landkarte in einem geeigneten Maßstab anzuzeigen, ggf. ergänzt um die Anzeige des möglichen Versorgungsbereiches dieses Senders, soweit sich dies aus den Sendercharakteristika ableiten lässt.

Diese Schritte sind von allen betroffenen Mobilfunknetzbetreibern für alle Notrufträger (Polizei, Feuerwehr) durchzuführen.

Wenn nun ein Mobilfunkteilnehmer 7 einen Notruf unter einer der einheitlichen Rufnummern 110 oder 112 absetzt, erkennt die Vermittlungstechnik 9 anhand der Funkzellen-Kennung die Funkzelle, beispielsweise Funkzelle 2, in der der Notruf initiiert wurde. Die Vermittlungstechnik 9 leitet, wenn es sich beispielsweise um einen Notruf 110 für die Polizei handelt, den Notruf an die der Funkzelle 2 zugeordneten Festnetznummer +49 222 3456789 des zugehörigen Notrufträgers, also im Beispiel der Polizei, an Hand der Tabelle 2 gemäß Schritt 5. zu.
Die Leitstelle 11 des Notrufträgers nimmt den Notruf entgegen. Gemäß Schritt 7. kann sie die von der Vermittlungstechnik "gewählte" Rufnummer +49 222 3456789 erkennen und anhand Tabelle 3 der Funkzelle 2 zuordnen. Gemäß Schritt 8. können nunmehr dem Bedienpersonal in der Leitstelle die Koordinaten der betroffenen Funkzelle 2 angezeigt werden. Darüber hinaus werden dem Bedienpersonal der Leitstelle noch weitere Informationen gemäß den Schritten 9. bzw. 10. gegeben. Das Bedienpersonal hat nun die für sie relevanten Informationen, um den Notruf angemessen zu bearbeiten und die notwendigen (Rettungs-) Maßnahmen einzuleiten.

Auf diese Weise reduziert sich auch das beschriebene Problem der Fehlleitung eines Notrufes zu einer lokal nicht zuständigen Leitstelle. Die lokal nicht zuständige Leitstelle kann mit Kenntnis der Funkzelle in der Regel leicht die tatsächlich zuständige Leitstelle ermitteln, etwa mit einem Blick auf die Landkarte, ausgehend vom möglichen Funkversorgungsbereich der ihr signalisierten Funkzelle, und ggf. den Notruf, wenn es ihr technisch möglich ist, an die zuständige Leitstelle des benachbarten Einzugsbereiches weitervermitteln.

### Ergänzende Ausgestaltung der Erfindung:

### Voraussetzung:

Das Mobilfunknetz hat in der Vermittlungstechnik Kenntnis über die Koordinaten des Ortes, von der die Notrufverbindung ausgeht, ggf. in einer Genauigkeit, die genauer als die zur Notrufverbindung gehörige Funkzelle ist. Diese Standortinformation über das notrufende Mobilfunkendgerät kann z.B. vom Mobilfunkendgerät selbst mittels eines GPS-Empfängers oder vom Mobilfunknetz mittels Laufzeitmessung der Funksignale oder mit Hilfe eines Satelliten-Ortungssystems ermittelt worden sein. Wie kann diese Information an die Leitstelle signalisiert werden?

### Implementierung:

Eine alleinige Implementierung sinngemäß der bevorzugten Ausgestaltung der Erfindung empfiehlt sich dann nicht mehr, wenn die Granularität der Ortsinformationen zu fein wird, weil dann eine entsprechend hohe (möglicherweise zu hohe) Anzahl an Telefonanschlüssen erforderlich wäre, um die für die beschriebene Implementierung notwendige Injektivität der Zuordnung zu garantieren.

Daher soll die Signalisierung gemäß der ergänzenden Ausgestaltung nicht indirekt über die Auswertung der gewählten Rufnummer, sondern direkt durch explizite Signalisierung der Ortsinformation in Form von Koordinaten erfolgen. Diese explizite Signalisierung erfolgt erfindungsgemäß per Nachwahl, zum Beispiel über Mehrfrequenzwahlverfahren, während einer bestehenden Telekommunikationsverbindung zwischen dem Notrufenden und dem Notrufempfänger.

Das Mehrfrequenzwahlverfahren (engl. Dual Tone Multiple Frequency - DTMF) bezeichnet ein Verfahren zur Übermittlung der Rufnummer. Jeder Taste eines Endgerätes sind dabei zwei Frequenzen zugeordnet. Beim Druck auf eine Taste wird aus den beiden Frequenzen, die ihr zugeordnet sind, ein Ton erzeugt. Das Wählen einer Rufnummer durch einen Teilnehmer erzeugt somit eine Folge von auf Mischfrequenzen basierenden Tönen.
Das Verfahren ermöglicht eine zuverlässigere Identifizierung eines Tastendrucks als beim zuvor verwendeten Impulswahlverfahren. Zudem kann beim Mehrfrequenzwahlverfahren eine deutlich größere Zahl an Tasten identifiziert werden. Während sich das Impulswahlverfahren auf die Identifizierung von Ziffern beschränkt, können beim Mehrfrequenzwahlverfahren auch Sondertasten wie <*> und <#>, aber auch Buchstaben *A*, *B*, *C*, *D* signalisiert werden. Wie auch beim Impulswahlverfahren, werden die erzeugten Steuersignale innerhalb des Verbindungskanals zur Übermittlung der Sprachdaten (bei ISDN der B-Kanal) übertragen. Das Verfahren kann außer zur Übermittlung von Rufnummern auch zur Konfiguration von TK-Anlagen oder zur Steuerung von Diensten des Telefonnetzes eingesetzt werden.

Die für die Tasten verwendeten standardisierten DTMF-Frequenzen (f) nach ITU-T Q.23 sind :

| f in Hz | 1209 | 1336 | 1477 | 1633 |
|---|---|---|---|---|
| 697 | 1 | 2 abc | 3 def | A |
| 770 | 4 ghi | 5 jkl | 6 mno | B |
| 852 | 7 pqrs | 8 tuv | 9 wxyz | C |
| 941 | * | 0 | # | D |

Alle modernen mobilen (und auch sonstigen) Telekommunikationsendgeräte unterstützen heutzutage DTMF. Auf diese Weise werden die Zeichen zum Aufbau einer Telekommunikationsverbindung gewählt. Auf diese Weise lassen sich aber auch, wenn die Telekommunikationsverbindung bereits besteht, Zeichen wählen, die etwa im Mobilfunk zur Steuerung und Konfiguration der Mobilbox verwandt werden.

Die Erfindungsidee nutzt nun die Funktionalität, die DTMF-Zeichen 0, ..., 9, A, B, C, D, *, # bei einer bestehenden Telekommunikationsverbindung nachwählen zu können, um auf diese Weise Informationen zu übertragen, nämlich im Falle des Notrufes eine entsprechend codierte Ortsinformation des Ortes, von dem die Notrufverbindung ausgeht. Die Nachwahl könnte, wenn die Ortsinformation bereits im Mobilfunkendgerät vorliegt, von dort erfolgen (für die Verbindung zwischen Mobilfunkendgerät und Notrufempfänger), ansonsten erfolgt die Nachwahl durch die Vermittlungstechnik (für die Verbindung zwischen Vermittlungstechnik und Notrufempfänger), vorausgesetzt, eine solche Ortsinformation liegt in der Vermittlungstechnik vor.

Die DTMF-Technik ist gedacht für leitungsvermittelte Netze ("CS", circuited switched networks). Nachwahlfähige Alternativen zu DTMF sind denkbar, aber derzeit nicht üblich. Bei paketvermittelnden Netzen ("PS", packet switched networks) könnte die "Nachwahl" entsprechend durch nachträglich vom Endgerät bzw. vom Netz verschickte Pakete / Daten vorgenommen werden. Letzteres ist insofern relevant, wenn man etwa an einen über VoIP ("Voice over IP") abgesetzten Notruf denkt.

Die ergänzende Ausgestaltung der Erfindung kann nun einerseits auf der in der bevorzugten Ausgestaltung beschrieben Realisierung aufsetzen, also zusätzlich zur bevorzugten Ausgestaltung angewendet werden. Auf diese Weise stünde der Notrufstelle in jedem Fall die Zellinformation zur Verfügung auch wenn einmal die genauere Lokalisierungstechnik ausgefallen ist - "Rückfalllösung" - oder wenn die genauere Lokalisierungstechnik nicht flächendeckend im Mobilfunknetz zur Verfügung steht.

In einer nicht beanspruchten Variante kann die ergänzende Ausgestaltung der Erfindung aber auch unabhängig von der in der bevorzugten Ausgestaltung beschriebenen Realisierung erfolgen. Dann hängt es von den Absprachen zwischen dem Mobilfunknetz und den Notrufabfragestellen ab, ob das Routing, sprich die Auswahl der zuständigen Notrufabfragestelle, zellbasiert erfolgt, das heißt die Funkzelle, in der der Notruf aufgebaut wurde, steht in jedem Fall der Vermittlungstechnik zur Verfügung, oder ob das Routing zunächst die genauere (genauer als zellgenau) Ortsinformation auswertet und auf Basis dieser Ortsinformation die zuständige Notrufabfragestelle auswählt. Hierzu muss in der Vermittlungstechnik ein entsprechende, in der Regel sehr umfangreiche Tabelle oder ein entsprechender Algorithmus hinterlegt sein, der diese Auswahl unterstützt.
Bei alleiniger Anwendung der zweiten Ausgestaltung der Erfindung benötigen die Leitstellen 11 dann in jedem Fall nur eine einzige "Notruf"-Rufnummer, über die sie von außen erreichbar sind. Das Routing zu einer nicht zuständigen Leitstelle ist auf diese Weise nahezu ausgeschlossen, wenn auch prinzipiell unvermeidbar bei Anruferstandorten unmittelbar an den Zuständigkeitsgrenzen immer noch möglich.

Die nachfolgende Beschreibung geht vom Routing auf Basis der Zellinformation aus, weil die Zellinformation in der Vermittlungstechnik sofort bereitsteht, so dass das Routing sofort erfolgen kann und somit der Notruf sofort aufgebaut werden kann. In der Regel muss eine genauere Ortsinformationen erst ermittelt werden, in der Regel über bestimmte Lokalisierungsserver bzw. GPS-Ortungsverfahren, so dass sich der Aufbau des Notrufes entsprechend verzögern würde. Nachteilig ist allerdings die etwas erhöhte Wahrscheinlichkeit eines Routings zu einer nicht zuständigen Leitstelle, wobei diese nicht nur die Zellinformation, sondern auch die genauere Ortsinformation erhält, so dass die Ermittlung der tatsächlich zuständigen Leitstelle ihr mit wenig Aufwand möglich sein sollte.

Die nachfolgende Beschreibung setzt darüber hinaus die Implementierung der bevorzugten Ausgestaltung der Erfindung voraus, so dass die Leitstelle in jedem Fall auch über die Zellinformation verfügt. Es sei nochmals betont, dass die ergänzende Ausgestaltung der Erfindung auch in Alleinstellung, das heißt unabhängig von der bevorzugten Ausgestaltung betrieben werden kann.

Es werden also im Einzelnen folgendes Verfahren und folgende technische Einrichtungen bei den Beteiligten vorgeschlagen.
Wir setzen auf den zehn Schritten aus dem ersten Fall auf und ergänzen diese zehn Schritte um weitere sieben Schritte:
11) Die Vermittlungstechnik 9 im Mobilfunknetz kann eine genauere Ortsinformation des Anruferstandortes (bei einem Notruf oder generell) zeitnah ermitteln. Dies kann durch bekannte Ortungsmaßnahmen erfolgen, wie zum Beispiel:
   - Messung der Signalstärken der Funksignale des Mobilfunkendgeräts 7, die bei den Basisstationen 5, 6 des Mobilfunknetzes empfangen werden,
   - Messung der Laufzeiten der Funksignale zwischen Mobilfunkendgerät 7 und den Basisstationen 5, 6, des Mobilfunknetzes,
   - Satellitenortungsverfahren, z.B. basierend auf GPS oder Galileo. Alternativ hat die Vermittlungstechnik 9 vom Mobilfunkendgerät 7 eine Ortsinformation erhalten.
      Die Vermittlungstechnik ist bei Bedarf in der Lage, die Ortsinformation in ein Format (z. B. ein gewisses Koordinatensystem) zu wandeln, das in der TK-Anlage 12 der Leitstelle genutzt wird.
12) Die Vermittlungstechnik 9 im Mobilfunknetz kodiert diese genauere Ortsinformation in eine DTMF-taugliche Kodierung (bestehend aus den 16 möglichen Zeichen 0, ..., 9, A, B, C, D, *, #).
13) Die Vermittlungstechnik 9 im Mobilfunknetz kann die entsprechend kodierte Ortsinformation über DTMF bei bereits bestehender Notrufverbindung zwischen dem Mobilfunkendgerät 7 und der Notruf-Leitstelle 11 nachwählen.
14) Die TK-Anlage 12 der Leitstelle hat eine technische Einrichtung, die die nachgewählten DTMF-Zeichen erkennt.
15) Die TK-Anlage 12 der Leitstelle hat eine technische Einrichtung, die die nachgewählten DTMF-Zeichen zur genaueren Ortsinformation dekodieren kann.
16) Die TK-Anlage 12 der Leitstelle hat eine technische Einrichtung, die die genauere Ortsinformation an einer Ausgabeeinheit (Display) für das Bedienpersonal bereitstellt.
17) Die TK-Anlage 12 der Leitstelle hat optional eine technische Einrichtung, die die genauere Ortsinformation graphisch aufbereitet und auf diese Weise den Anruferstandort auf einer Landkarte in einem geeigneten Maßstab anzeigt.

Mit Bezug auf die Schritte 11), 12) und 13) ist es als Alternative möglich, dass eine im Mobilfunkendgerät 7 vorliegende "genaue" Ortsinformation unmittelbar im Mobilfunkendgerät 7 formatiert und vom Mobilfunkendgerät 7 als DTMF-Signal über die Vermittlungstechnik 9 des Mobilfunknetzes an den Notrufträger 11 übertragen wird.

Wenn nun beispielsweise ein Mobilfunkteilnehmer einen Notruf 110 oder 112 absetzt, erkennt die Vermittlungstechnik 9 die Funkzelle 2, in der der Notruf initiiert wurde. Die Vermittlungstechnik 9 leitet den Notruf an die Festnetznummer des zugehörigen Notrufträgers 11 an Hand der in der Datenbasis 10 verfügbaren Tabelle 2 gemäß Schritt 5. zu.
Die Leitstelle 11 des Notrufträgers nimmt den Notruf entgegen. Gemäß Schritt 7. kann sie die gewählte Rufnummer erkennen. Gemäß Schritt 8. können nunmehr dem Bedienpersonal in der Leitstelle die Koordinaten der betroffenen Funkzelle 2 angezeigt werden. Darüber hinaus werden dem Bedienpersonal der Leitstelle optional noch weitere Informationen gemäß Schritt 9. bzw. Schritt 10. gegeben.

Die Vermittlungstechnik 9 (oder das Mobilfunkendgerät 7) ermittelt parallel die genauere Ortsinformation zum Anruferstandort, z.B. mittels Auswertung der Signalstärke und Laufzeitmessungen der von dem Mobilfunkendgerät 7 in den Basisstationen 5, 6 empfangenen Funksignale. Die Vermittlungstechnik 9 (oder das Mobilfunkendgerät 7) kodiert diese vorzugsweise als geographische Koordinaten vorliegende Ortsinformation DTMF-tauglich und wählt während der bestehenden Kommunikationsverbindung zwischen Mobilfunkendgerät 7 und Leitstelle 11 die zugehörigen DTMF-Zeichen nach (gemäß den Schritten 11. - 13.).
Die Leitstelle 11 erkennt die nachgewählten DTMF-Zeichen, dekodiert diese in die genauere Ortsinformation und zeigt diese dem Bedienpersonal z.B. in Form von geographischen Koordinaten an. Darüber hinaus werden dem Bedienpersonal der Leitstelle optional noch die graphische Informationen gemäß Schritt 17. gegeben. Das heißt die ermittelten Koordinaten können auf einer digitalen Landkarte dargestellt werden.
Das Bedienpersonal hat nun die für sie relevanten Informationen, um den Notruf angemessen zu bearbeiten und die notwendigen (Rettungs-) Maßnahmen einzuleiten.

Wie bereits weiter oben erwähnt wurde, sind neben DTMF Nachwahlverfahren auch andere Techniken für die Erfindung verwendbar. Bei Gesprächen bzw. sonstigen Datenverbindungen über packet switched - Netzwerke erfolgt ein entsprechendes Vorgehen, d.h. die Standortinformationen werden demzufolge empfängergerecht formatiert nachträglich z.B. als Datenpakete übermittelt. Entsprechend kann die nachträgliche Übertragung der Standortinformationen in Form von Datenpaketen auch bei Internet basierten Verbindungen verwendet werden.

### Liste der Bezugszeichen

- 1: Funkzelle
- 2: Funkzelle
- 3: Funkzelle
- 4: Funkzelle
- 5: Basisstation
- 6: Basisstation
- 7: Mobilfunkendgerät
- 8: (Einzugs)Gebiet
- 9: Mobilfunkvermittlung
- 10: Datenbasis
- 11: Leitstelle (Notrufträger)
- 12: Telekommunikationsanlage, Datenverarbeitung
- 13: Datenbasis
- 14: Verwaltung (Mobilfunk)
- 15: Verwaltung (Notrufträger)

## Patentansprüche

1. Verfahren zur Übermittlung von Informationen über den Standort eines Mobilfunkendgeräts (7) mittels eines Mobilfunknetzes an einen Empfänger (11), mit den Schritten,
- dass ein im Versorgungsbereich des Mobilfunknetzes liegendes Gebiet (8) festgelegt wird, und das Gebiet in mehrere Teilgebiete (1, 2, 3, 4) unterteilt wird,
dass dem Empfänger (11) eine Vielzahl von unterschiedlichen Rufnummern zugeordnet werden, wobei der Empfänger unter jeder dieser Rufnummern anwählbar ist;
- dass den Teilgebieten jeweils eine dieser Rufnummern - und zwar injektiv - zugeordnet wird,
dass bei einem vom Mobilfunkendgerät (7) an den Empfänger (11) gerichteten Anrufwunsch der Standort des Mobilfunkendgeräts im Rufaufbau oder durch ein Ortungsverfahren bestimmt und dem Mobilfunksystem zur Verfügung gestellt wird,
- dass der ermittelte Standort einem Teilgebiet und damit einer Rufnummer des Empfängers zugeordnet wird,
- dass unter dieser Rufnummer eine Verbindung zwischen dem Mobilfunkendgerät und dem Empfänger hergestellt wird, und
- dass der Empfänger anhand der für die Verbindung verwendeten Rufnummer das zugeordnete Teilgebiet bestimmen kann und damit Informationen über den ungefähren Standort des Mobilfunkengeräts erhält.

2. Verfahren nach Anspruch 1, **dadurch gekennzeichnet, dass** das Gebiet (8) im wesentlichen ein durch eine Gemeindegrenze, Stadtgrenze, Kreisgrenze, Bezirksgrenze, Landesgrenze oder Staatsgrenze bestimmtes Gebiet umfasst.

3. Verfahren nach Anspruch 1, **dadurch gekennzeichnet, dass** das Gebiet (8) im wesentlichen das gesamte Versorgungsgebiet des Mobilfunknetzes umfasst.

4. Verfahren nach Anspruch 1, **dadurch gekennzeichnet, dass** das Gebiet (8) im wesentlichen einen regionalen Einzugsbereich einer Hilfs- oder Serviceorganisation umfasst.

5. Verfahren nach einem der Ansprüche 1 bis 4, **dadurch gekennzeichnet, dass** als Teilgebiet im wesentlichen der Versorgungsbereich einer Funkzelle (1, 2, 3, 4) des Mobilfunknetzes festgelegt wird.

6. Verfahren nach einem der Ansprüche 1 bis 4, **dadurch gekennzeichnet, dass** als Teilgebiet im wesentlichen der Versorgungsbereich einer bestimmten Gruppe von Funkzellen des Mobilfunknetzes festgelegt wird.

7. Verfahren nach einem der vorhergehenden Ansprüche, **dadurch gekennzeichnet, dass** der Anrufwunsch unter einer einheitlichen sich von der Vielzahl von Rufnummern unterscheidenden Rufnummer abgesetzt wird.

8. Verfahren nach einem der Ansprüche 1 bis 7, **dadurch gekennzeichnet, dass** die Zuordnung des ermittelten Standorts zum Teilgebiet und der diesem zugeordneten Rufnummer im Mobilfunkendgerät erfolgt.

9. Verfahren nach einem der Ansprüche 1 bis 7, **dadurch gekennzeichnet, dass** die Zuordnung des ermittelten Standorts zum Teilgebiet und der diesem zugeordneten Rufnummer in einem Netzelement des Mobilfunknetz erfolgt.

10. Verfahren nach einem der vorhergehenden Ansprüche, **dadurch gekennzeichnet, dass** im Falle, wenn eine Standortinformation in Form von geographischen Koordinaten vorliegt, zusätzlich folgende Schritte durchgeführt werden:
- Umformatieren der Standortinformation in ein empfängergerechtes Format (z.B. Koordinatensystem),
- Umwandeln der Standortinformation in eine Kodierung im nachwahlfähigen Format, z.B. DTMF-Format,
- Übermitteln der kodierten Standortinformation während der Verbindung zwischen Mobilfunkendgerät (7) und Empfänger (11) per Nachwahlverfahren an den Empfänger, und
- Erkennen, Dekodieren und Auswerten der nachgewählten kodierten Standortinformation seitens des Empfängers und damit Erhalt von Informationen über den Standort des Mobilfunkendgerätes.

11. Verfahren nach einem der vorhergehenden Ansprüche, **dadurch gekennzeichnet, dass** als Ortungsverfahren seitens des Mobilfunknetzes eine Standortbestimmung durch Auswerten der Kennung, Cell-ID, der die Mobilstation versorgenden Funkzelle (1, 2, 3, 4) durchgeführt wird.

12. Verfahren nach einem der vorhergehenden Ansprüche, **dadurch gekennzeichnet, dass** als Ortungsverfahren seitens des Mobilfunknetzes eine Standortbestimmung mittels Laufzeitmessung von zwischen dem Mobilfunknetz und der Mobilstation übermittelten Funksignalen durchgeführt wird.

13. Verfahren nach einem der vorhergehenden Ansprüche, **dadurch gekennzeichnet, dass** als Ortungsverfahren seitens des Mobilfunkendgeräts eine auf Navigationssatelliten basierende Standortbestimmung durchgeführt wird.

14. Verfahren nach einem der Ansprüche 10 bis 13, **dadurch gekennzeichnet, dass** die Umformatierung der Standortinformation in ein empfängergerechtes Format durch das Mobilfunkendgerät (7) vorgenommen wird.

15. Verfahren nach einem der Ansprüche 10 bis 13, **dadurch gekennzeichnet, dass** die Umformatierung der Standortinformation in ein empfängergerechtes Format durch ein Netzelement (9) des Mobilfunknetzes vorgenommen wird.

16. Verfahren nach einem der Ansprüche 10 bis 15, **dadurch gekennzeichnet, dass** die Kodierung der Standortinformation in ein nachwahlfähiges Format durch das Mobilfunkendgerät (7) vorgenommen wird.

17. Verfahren nach einem der Ansprüche 10 bis 15, **dadurch gekennzeichnet, dass** die Kodierung der Standortinformation in ein nachwahlfähiges Format durch ein Netzelement (9) des Mobilfunknetzes vorgenommen wird.

18. Verfahren nach einem der Ansprüche 10 bis 17, **dadurch gekennzeichnet, dass** die Übermittlung der kodierten Standortinformation zum Empfänger durch das Mobilfunkendgerät (7) vorgenommen wird.

19. Verfahren nach einem der Ansprüche 10 bis 17, **dadurch gekennzeichnet, dass** die Übermittlung der kodierten Standortinformation zum Empfänger durch ein Netzelement (9) des Mobilfunknetzes vorgenommen wird.

20. Verfahren nach einem der vorhergehenden Ansprüche, **dadurch gekennzeichnet, dass** eine Standortinformation in Form einer Funkzellen-Kennung, Cell-ID, verwendet wird.

21. Verfahren nach einem der vorhergehenden Ansprüche, **dadurch gekennzeichnet, dass** eine Standortinformation in Form von geographischen Koordinaten verwendet wird.

22. System zur Übermittlung von Informationen über den Standort eines Mobilfunkendgeräts (7) mittels eines Mobilfunknetzes an einen Empfänger (11), welches umfasst:
- Einrichtungen (14, 15) zur Festlegung eines im Versorgungsbereich des Mobilfunknetzes liegenden Gebiets (8) und Unterteilung des Gebietes in mehrere Teilgebiete (1, 2, 3, 4),
- Einrichtungen (15) zur Zuordnung einer Vielzahl von unterschiedlichen Rufnummern zum Empfänger, wobei der Empfänger unter jeder dieser Rufnummern anwählbar ist;
Einrichtungen (14) zum Zuordnen von jedem Teilgebiet zu jeweils einer Rufnummer,
- Einrichtungen (9) zur Bestimmung des Standorts des Mobilfunkendgeräts durch das Mobilfunkendgerät selbst oder während des Rufaufbaus oder durch ein Ortungsverfahren, sobald ein vom Mobilfunkendgerät an den Empfänger (11) gerichteter Anrufwunsch erkannt wird, wobei die Standortinformation dem Mobilfunksystem zur Verfügung gestellt wird,
- Einrichtungen (9, 10) zur Zuordnung der ermittelten Standortinformation zu einem Teilgebiet und damit einer Rufnummer des Empfängers,
- Einrichtungen (9) zur Herstellung einer Verbindung zwischen dem Mobilfunkendgerät und dem Empfänger unter dieser Rufnummer, und
- Einrichtungen (12) beim Empfänger, die anhand der für die Verbindung verwendeten Rufnummer das zugeordnete Teilgebiet bestimmen und Informationen über den ungefähren Standort des Mobilfunkendgerätes bereitstellen.

## Claims

1. Process for transmitting information about the location of a mobile radio terminal (7) by means of a mobile radio network to a receiver (11), having the steps:
- that an area (3) lying in the supply region of the mobile radio network is fixed, and the area is divided into several sub-areas (1, 2, 3, 4),
- that a plurality of different call numbers are assigned to the receiver (11), wherein the receiver can be dialled from any of these call numbers;
- that in each case one of these call numbers - and specifically injectively - is assigned to the sub-areas,
- that for a call request directed to the receiver (11) from the mobile radio terminal (7), the location of the mobile radio terminal is determined in the call set-up or by a locating process and made available to the mobile radio system,
- that the location determined is assigned to a sub-area and hence to a call number of the receiver,
- that from this call number, a connection is made between the mobile radio terminal and the receiver, and
- that the receiver may determine the assigned sub-area using the call number employed for the connection and hence receives information about the approximate location of the mobile radio terminal.

2. Process according to claim 1, **characterised in that** the area (8) comprises essentially an area defined by a community boundary, city boundary, constituency boundary, district boundary, state border or national border.

3. Process according to claim 1, **characterised in that** the area (8) comprises essentially the entire supply area of the mobile radio network.

4. Process according to claim 1, **characterised in that** the area (8) comprises essentially a regional service region of an emergency or service organisation.

5. Process according to one of claims 1 to 4, **characterised in that** essentially the supply region of a radio cell (1, 2, 3, 4) of the mobile radio network is fixed as the sub-area.

6. Process according to one of claims 1 to 4, **characterised in that** essentially the supply region of a certain group of radio cells of the mobile radio network is fixed as the sub-area.

7. Process according to one of the preceding claims, **characterised in that** the call request is transmitted from a standardised call number differing from the plurality of call numbers.

8. Process according to one of claims 1 to 7, **characterised in that** the assignment of the location determined to the sub-area and to the call number assigned to the latter takes place in the mobile radio terminal.

9. Process according to one of claims 1 to 7, **characterised in that** the assignment of the location determined to the sub-area and to the call number assigned to the latter takes place in a network element of the mobile radio network.

10. Process according to one of the preceding claims, **characterised in that** in the event that location information is present in the form of geographic coordinates, the following steps are additionally carried out:
- reformatting the location information into a receiver-compatible format (for example coordinate system),
- converting the location information into coding in a format suitable for suffix dialling, for example DTMF format,
- transmitting the coded location information during connection between mobile radio terminal (7) and receiver (11) by suffix-dialling process to the receiver, and
- identifying, decoding and evaluating the suffix-dialled coded location information on the part of the receiver and hence receipt of information about the location of the mobile radio terminal.

11. Process according to one of the preceding claims, **characterised in that** location determination is carried out by evaluating the identification, cell ID, of the radio cell (1, 2, 3, 4) supplying the mobile station, as a locating process on the part of the mobile radio network.

12. Process according to one of the preceding claims, **characterised in that** location determination is carried out by means of transit-time measurement of radio signals transmitted between the mobile radio network and the mobile station, as a locating process on the part of the mobile radio network.

13. Process according to one of the preceding claims, **characterised in that** location determination based on navigation satellites is carried out as a locating process on the part of the mobile radio terminal.

14. Process according to one of claims 10 to 13, **characterised in that** reformatting of the location information into a receiver-compatible format is carried out by the mobile radio terminal (7).

15. Process according to one of claims 10 to 13, **characterised in that** reformatting of the location information into a receiver-compatible format is carried out by a network element (9) of the mobile radio network.

16. Process according to one of claims 10 to 15, **characterised in that** coding of the location information into a format suitable for suffix dialling is carried out by the mobile radio terminal (7).

17. Process according to one of claims 10 to 15, **characterised in that** coding of the location information into a format suitable for suffix dialling is carried out by a network element (9) of the mobile radio network.

18. Process according to one of claims 10 to 17, **characterised in that** transmitting the coded location information to the receiver is carried out by the mobile radio terminal (7).

19. Process according to one of claims 10 to 17, **characterised in that** transmitting the coded location information to the receiver is carried out by a network element (9) of the mobile radio network.

20. Process according to one of the preceding claims, **characterised in that** location information is used in the form of radio cell identification, cell ID.

21. Process according to one of the preceding claims, **characterised in that** location information is used in the form of geographic coordinates.

22. System for transmitting information about the location of a mobile radio terminal (7) by means of a mobile radio network to a receiver (11), which comprises:
- devices (14, 15) for fixing an area (8) lying in the supply region of the mobile radio network and dividing the area into several sub-areas (1, 2, 3,4),
- devices (15) for assigning a plurality of different call numbers to the receiver, wherein the receiver can be dialled from any of these call numbers;
- devices (14) for assigning each sub-area to in each case one call number,
- devices (9) for determining the location of the mobile radio terminal by the mobile radio terminal itself or during call set-up or by a locating process, as soon as a call request directed to the receiver (11) from the mobile radio terminal is identified, wherein the location information is made available to the mobile radio system,
- devices (9, 10) for assigning the location information determined to a sub-area and hence to a call number of the receiver,
- devices (9) for producing a connection between the mobile radio terminal and the receiver from this call number, and
- devices (12) at the receiver, which determine the assigned sub-area using the call number employed for the connection and provide information about the approximate location of the mobile radio terminal.

## Revendications

1. Procédé pour transmettre à un récepteur (11) des informations sur la position d'un terminal mobile (7) à l'aide d'un réseau de radiotéléphonie mobile, avec les étapes suivantes :
- une zone (8) située dans la zone de couverture du réseau de radiotéléphonie mobile est fixée et est divisée en plusieurs zones partielles (1, 2, 3, 4),
- un grand nombre de numéros d'appel différents est affecté au récepteur (11), le récepteur pouvant être appelé à chacun de ces numéros,
- ces numéros d'appel sont affectés aux zones partielles respectives, et ce par injection,
- en présence d'un souhait d'appel du terminal mobile (7) vers le récepteur (11), la position du terminal mobile est définie lors de l'établissement de la communication ou grâce à un procédé de localisation et est mise à la disposition du système de radiotéléphonie mobile,
- la position déterminée est affectée à une zone partielle et, ainsi, à un numéro d'appel du récepteur,
- à ce numéro d'appel une communication est établie entre le terminal mobile et le récepteur, et
- le récepteur, à l'aide du numéro d'appel utilisé pour la communication, peut définir la zone partielle affectée et reçoit ainsi des informations sur la position approximative du terminal mobile.

2. Procédé selon la revendication 1, **caractérisé en ce que** la zone (8) comprend essentiellement une zone définie par une limite de commune, une limite de ville, une limite de canton, une limite de district, une limite de région ou une limite d'état.

3. Procédé selon la revendication 1, **caractérisé en ce que** la zone (8) comprend essentiellement toute la zone de couverture du réseau de radiotéléphonie mobile.

4. Procédé selon la revendication 1, **caractérisé en ce que** la zone (8) comprend essentiellement une zone de rayonnement régionale d'une organisation d'aide ou de service.

5. Procédé selon l'une des revendications 1 à 4, **caractérisé en ce qu'**on fixe essentiellement comme zone partielle la zone de couverture d'une cellule radio (1, 2, 3, 4) du réseau de radiotéléphonie mobile.

6. Procédé selon l'une des revendications 1 à 4, **caractérisé en ce qu'**on fixe essentiellement comme zone partielle la zone de couverture d'un groupe défini de cellules radio du réseau de radiotéléphonie mobile.

7. Procédé selon l'une des revendications précédentes, **caractérisé en ce que** le souhait d'appel est émis sous un numéro d'appel unique qui est différent de la multiplicité de numéros d'appel.

8. Procédé selon l'une des revendications 1 à 7, **caractérisé en ce que** l'affectation de la position déterminée à la zone partielle et au numéro d'appel affecté à celle-ci se fait dans le terminal mobile.

9. Procédé selon l'une des revendications 1 à 7, **caractérisé en ce que** l'affectation de la position déterminée à la zone partielle et au numéro d'appel affecté à celle-ci se fait dans un élément de réseau du réseau de radiotéléphonie mobile.

10. Procédé selon l'une des revendications précédentes, **caractérisé en ce que** dans le cas où une information de position se présente sous la forme de coordonnées géographiques, les étapes suivantes sont exécutées en supplément :
- conversion de l'information de position en un format adapté au récepteur (par exemple système de coordonnées),
- conversion de l'information de position en un codage dans le format de postnumérotation, par exemple le format DTMF,
- transmission de l'information de position codée au récepteur (11) pendant la communication entre le terminal mobile (7) et ledit récepteur (11) grâce à un procédé de postnumérotation,
- détection, décodage et analyse, côté récepteur, de l'information de position codée postnumérotée, et ainsi obtention d'informations sur la position du terminal mobile.

11. Procédé selon l'une des revendications précédentes, **caractérisé en ce qu'**on effectue comme procédé de localisation côté réseau de radiotéléphonie mobile une définition de position en analysant l'identification, Cell-ID, de la cellule (1, 2, 3, 4) qui couvre la station mobile.

12. Procédé selon l'une des revendications précédentes, **caractérisé en ce qu'**on effectue comme procédé de localisation côté réseau de radiotéléphonie mobile une définition de position à l'aide d'une mesure de durée de propagation de signaux radio transmis entre le réseau de radiotéléphonie mobile et la station mobile.

13. Procédé selon l'une des revendications précédentes, **caractérisé en ce qu'**on effectue comme procédé de localisation côté terminal mobile une définition de position basée sur les satellites de navigation.

14. Procédé selon l'une des revendications 10 à 13, **caractérisé en ce que** le reformatage de l'information de position dans un format adapté au récepteur est effectué par le terminal mobile (7).

15. Procédé selon l'une des revendications 10 à 13, **caractérisé en ce que** le reformatage de l'information de position dans un format adapté au récepteur est effectué par un élément de réseau (9) du réseau de radiotéléphonie mobile.

16. Procédé selon l'une des revendications 10 à 15, **caractérisé en ce que** le codage de l'information de position dans un format de postnumérotation est effectué par le terminal mobile (7).

17. Procédé selon l'une des revendications 10 à 15, **caractérisé en ce que** le codage de l'information de position dans un format de postnumérotation est effectué par un élément de réseau (9) du réseau de radiotéléphonie mobile.

18. Procédé selon l'une des revendications 10 à 17, **caractérisé en ce que** la transmission de l'information de position codée au récepteur est effectuée par le terminal mobile (7).

19. Procédé selon l'une des revendications 10 à 17, **caractérisé en ce que** la transmission de l'information de position codée au récepteur est effectuée par un élément de réseau (9) du réseau de radiotéléphonie mobile.

20. Procédé selon l'une des revendications précédentes, **caractérisé en ce qu'**on utilise une information de position sous forme d'identification de cellule, Cell-ID.

21. Procédé selon l'une des revendications précédentes, **caractérisé en ce qu'**on utilise une information de position sous forme de coordonnées géographiques.

22. Système pour transmettre à un récepteur (11) des informations sur la position d'un terminal mobile (7) à l'aide d'un réseau de radiotéléphonie mobile, qui comprend :
- des dispositifs (14, 15) pour fixer une zone (8) située dans la zone de couverture du réseau mobile et pour diviser ladite zone (8) en plusieurs zones partielles (1, 2, 3, 4),
- des dispositifs (15) pour affecter un grand nombre de numéros d'appels différents au récepteur, le récepteur pouvant être appelé à chacun de ces numéros,
- des dispositifs (14) pour affecter chaque zone partielle à un numéro d'appel respectif,
- des dispositifs (9) pour définir la position du terminal mobile, à l'aide du terminal mobile lui-même ou pendant l'appel ou grâce à un procédé de localisation, dès qu'un souhait d'appel du terminal mobile vers le récepteur (11) est détecté, l'information de position étant mise à la disposition du système de radiotéléphonie mobile,
- des dispositifs (9, 10) pour affecter l'information de position déterminée à une zone partielle et, ainsi, à un numéro d'appel du récepteur,
- des dispositifs (9) pour établir une communication entre le terminal mobile et le récepteur à ce numéro, et
- des dispositifs (12), auprès du récepteur, qui définissent à l'aide du numéro d'appel utilisé pour la communication la zone partielle affectée et qui fournissent des informations sur la position approximative du terminal mobile.
